# EUROPEAN PATENT SPECIFICATION

(11) **EP 3 030 376 B1**
(45) Date of publication and mention of the grant of the patent: **06.09.2017**
(21) Application number: 14759298.4
(22) Date of filing: 07.07.2014
(51) Int. Cl.: B23Q 3/08, B23Q 1/03, B25B 11/00

(54) **WORKPIECE HOLDING APPARATUS**
WERKSTÜCKHALTEVORRICHTUNG
APPAREIL PORTE-PIÈCE

(30) Priority: 06.08.2013 IT MO20130231
(43) Date of publication of application: 15.06.2016
(73) Proprietor: C.M.S. S.p.A., 24019 Zogno (BG) (IT)
(72) Inventor: RINALDI, Nicola, I-24125 Bergamo (IT)
(74) Representative: Villanova, Massimo
(86) International application number: PCT/IB2014/062921
(87) International publication number: WO 2015/019210

(56) References cited:
- WO-A2-2011/017652
- US-A1- 2009 057 971

## Description

### Background of the invention

The invention relates to an apparatus for holding a workpiece, in particular a wide workpiece, with a dimension (thickness) that is significantly less than the other two dimensions (width and length), of non-plane shape, for example a panel with a complex shape like, in particular, a panel with double curvature.

Specifically, but not exclusively, the apparatus in question can be usefully used in the aerospace industry and/or in the automotive industry, in particular in a numerically controlled machining centre for machining workpieces in various materials, for example aluminium, plastics, composite materials, etc.

In particular, reference is made to an apparatus as in the preamble to the first claim, shown for example by patent US 8,079,578 B2.

Such an apparatus comprises a plurality of linear actuators that are suitable for engaging and stiffly supporting at least one workpiece in a fixed machining position, for example for cutting, milling, boring, outlining, welding, etc. During these processes the workpiece will have to be positioned precisely and be maintained stiffly in a preset position.

In the known apparatus the various linear actuators are programmable in such a manner as to be adaptable to use with workpieces of different shape, making the apparatus universal. Providing each linear actuator with a pneumatic gripping device (suction cup) is also known that can be oriented in space with at least two degrees of freedom, by virtue of the fact that the suction cup is self-adjustable, in an idle manner, at the moment of loading the workpiece, through the effect of the weight and the stiffness of the workpiece, and in the event of non-perfect self-adjustment, by the action of the operator. The pneumatic gripping device can be oriented with two degrees of freedom by two independent motor drives.

### Summary of the invention

One object of the invention is to improve apparatuses of known type mentioned above that are suitable for holding a workpiece in a preset machining position.

One advantage is to make an apparatus - configured in particular for holding in position a workpiece of complex shape having a dimension (thickness) that is significantly less than the other two dimensions (width and length), in particular a panel with double curvature - that is able to orient simply the gripping devices (suction cups) of the workpiece. Further, the apparatus in question enables the gripping devices to be oriented before the workpiece is loaded.

One advantage is to permit precise and stable positioning of the workpiece.

One advantage is to avoid deformation or other damage to the workpiece, even if the workpiece has large dimensions and/or certain flexibility.

One advantage is to provide a constructionally simple and cheap apparatus for holding a workpiece in the machining position.

One advantage is to use a relatively reduced number of motors to position and orient various gripping devices of the workpiece.

One advantage is to make available an apparatus of universal type having a plurality of engaging and supporting devices of the workpiece that are programmable in such a manner as to be adaptable for use with workpieces of different shape.

One advantage is to provide an apparatus with a plurality of gripping (vacuum) devices each of which can be oriented in space with at least two degrees of freedom to define, in a programmable manner, engaging and supporting surfaces of the workpiece of the desired shape, even if complex.

One advantage is to minimise the stress on the workpiece exerted by the various gripping devices of the apparatus, in particular during the step of positioning the workpiece on the apparatus, such as to avoid damage to the workpiece.

One advantage is to define, simply and precisely, the desired engaging and supporting surface of the workpiece, before the workpiece is taken to the apparatus and placed in contact therewith.

One advantage is to devise an apparatus with relatively reduced dimensions.

Such objects and advantages and still others are all achieved by the apparatus according to one or more of the claims set out below.

In one example, an apparatus comprises a plurality of actuators, each of which carries a gripping device that is orientable in space; each actuator is associated with a respective reference element that is positionable in a preset reference position; each actuator is driven in such a manner as to bring the gripping device into contact against the reference element to adjust in a desired orientation, the adjustment being achieved by the effect of the contact of the gripping device against the reference element located in the preset reference position and through the effect of a relative movement between the actuator that carries the gripping device and the reference element in contact with the gripping device. The reference element in fact gives rise to abutting means arranged at a certain distance from a fulcrum (for example the centre of a spherical coupling of the orientable head of the gripping device) so that the action of such abutting means generates torque that rotates the gripping device around the fulcrum. Each gripping device can thus be oriented in a programmable manner and independently of the other gripping devices. Each gripping device can be fixed in the desired orientation and can then be moved, by the actuator, to reach a preset position, such that all the gripping devices together define an engaging and supporting surface shaped at least partially like the workpiece.

### Brief description of the drawings

The invention can be better understood and implemented with reference to the attached drawings that illustrate some non-limiting examples.
Figure 1 shows an apparatus of known type having various operating units each comprising a linear actuator and a gripping device.
Figure 2 is a perspective view of a first embodiment of an operating unit made according to the invention.
Figures 3 to 5 are three views in a partially sectioned vertical elevation of the operating unit in figure 2 in three different operating configurations.
Figure 6 is a top plan view of a second embodiment of an operating unit made in accordance with the invention.
Figures 7 to 9 are three views in a partially sectioned vertical elevation of the operating unit in figure 6 in three different operating configurations.
Figure 10 is a perspective view of a third embodiment of an operating unit made in accordance with the invention.
Figure 11 is a view of the unit in figure 10 in a different perspective.
Figures 12 and 13 are two views in a vertical elevation of the operating unit in figure 10 in two different operative configurations.

### Detailed description

In this description, similar elements that are in common to the various illustrated examples have been indicated with the same numerals.

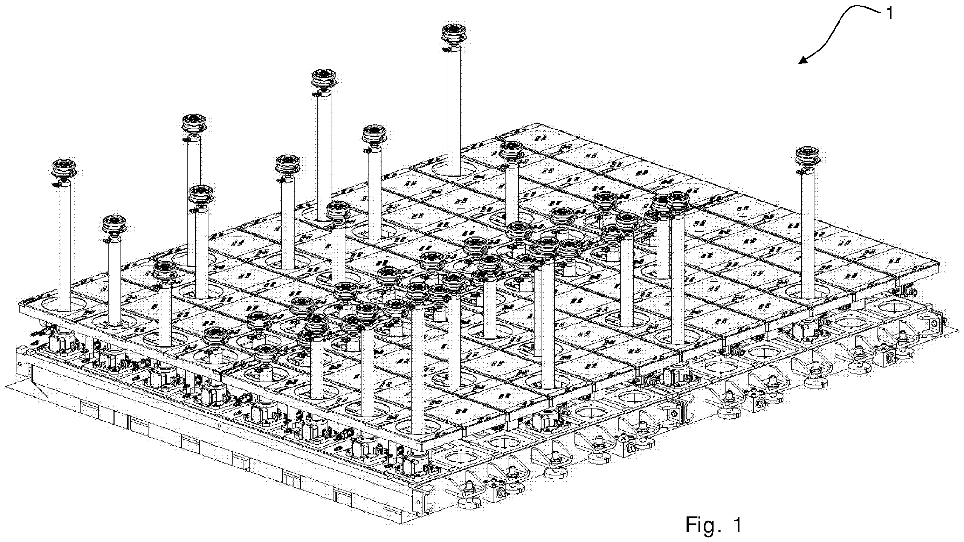

With reference to Figure 1, with 1 overall an apparatus of known type for holding a workpiece has been indicated. The apparatus 1 comprises a plurality of operating units arranged in an ordered manner, each of which comprises an actuator (linear, in particular with a vertical axis), provided at one (upper) end with a gripping device, for example of the vacuum type with a suction cup. The various suction cups may be arranged for defining an engaging and supporting surface of the workpiece so that the workpiece is positioned precisely and maintained stiffly in a preset position.

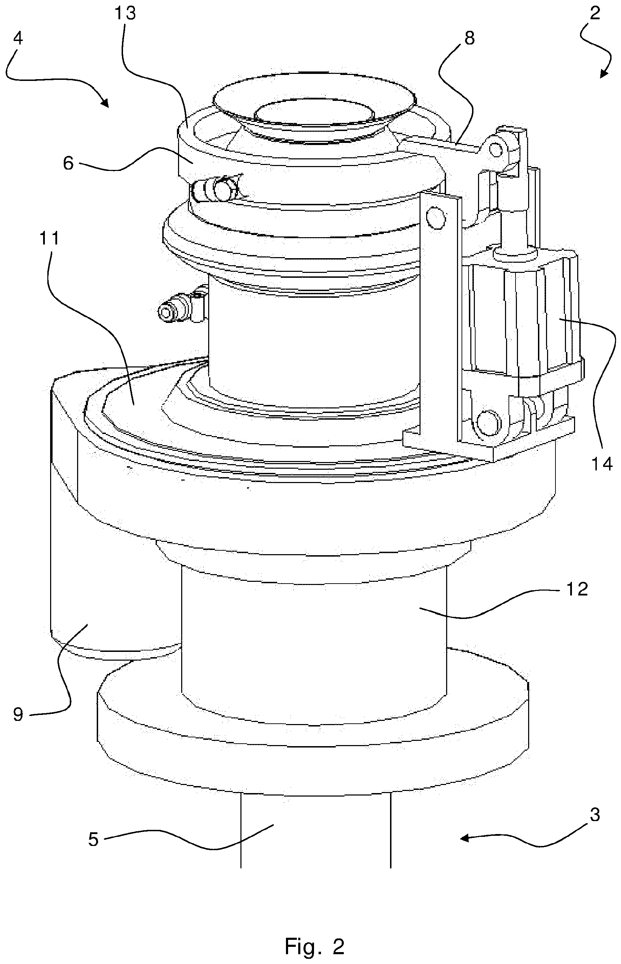

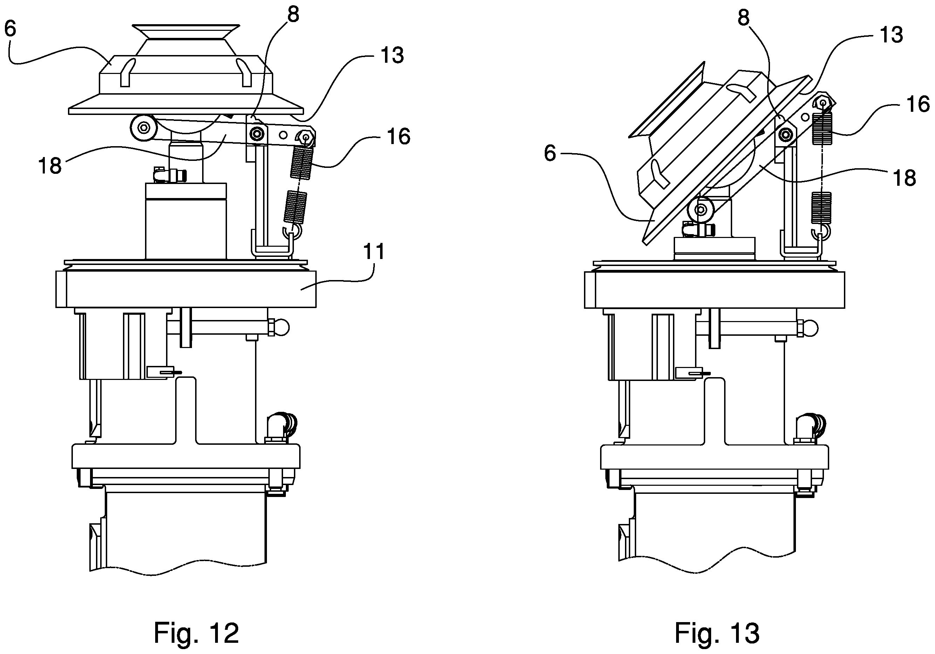

Figures 2 to 13 show three different embodiments of operating units 2 made according to the invention. Each operating unit 2 may be part of an apparatus that is similar to the one shown in figure 1 comprising a plurality of operating units (arranged in an ordered manner). An apparatus according to the invention may comprise one or more operating units 2. In particular, an apparatus according to the invention may comprise a plurality of operating units, at least one of which, or at least a part of which, is made like at least one of the operating units 2 according to the invention. In particular, an apparatus according to the invention may comprise a plurality of operating units that are all made like at least one of the operating units 2 according to the invention.

The operating unit 2 according to the first embodiment (figures 2 to 5) comprises an actuator 3 (linear, shown only partially) and a gripping device 4 for engaging and supporting the workpiece. The linear actuator 3 may comprise, for example, an electrically driven actuator. The linear actuator 3 may be driven, for example, by a servomotor. In figure 2 an (upper) end is shown of a movable element 5 (piston) of the linear actuator.

The gripping device 4 may comprise, as in this embodiment, a vacuum gripping device (for example provided with at least one suction cup device). The gripping device 4 is carried by the linear actuator 3 with the possibility of orientation in space with respect to the linear actuator (in particular with respect to the movable element 5 that carries the gripping device 4). This orientation in space may be permitted, as in this specific embodiment, by virtue of a spherical coupling between a part (head 6) of the gripping device (including the suction cup) intended for contact with the workpiece and another part (spherical support 7) stiffly connected to the movable element 5 of the actuator 3. It is nevertheless possible to provide other couplings that are suitable for permitting orientation in the space of the gripping device 4.

The operating position of the gripping device 4 (i.e. the position that is suitable for enabling the head 6 to define at least one part of the engaging and supporting surface shaped like the workpiece) can be determined by the orientation thereof with respect to the actuator 3 (in particular with respect to the movable element 5) and by the position (of the movable element 5) of the actuator.

The operating unit 2 according to the invention further comprises orienting means for orienting in an automatic and programmable manner the orientable part (head 6) of the gripping device 4 according to a preset orientation (in particular in such a manner as to define the desired engaging and supporting surface of the workpiece).

This orienting means may comprise, in particular, at least one reference element 8 that is positionable in a preset position, so as to make abutting means against which the gripping device 4 will come into contact to modify the orientation thereof. In the first embodiment (figures 2 to 5) this reference element 8 comprises a lever, in particular in the shape of a stiff rod. The reference element 8 may be movable, for example, around the orientable part (head 6) of the gripping device 4 to adopt the appropriate position for inducing the desired orientation of the orientable part of the gripping device 4. The reference element 8 may be arranged near the periphery of the orientable part of the gripping device 4 and may comprise a lever protruding inside towards the aforesaid orientable part.

The reference element 8 may be positionable (with an orbital movement) around the gripping device 4, as in the embodiments disclosed here. In particular the reference element 8 may be movable on a movement plane that is transverse, in particular perpendicular, to the (vertical) axis of the linear actuator 3. The reference element 8 may be, for example, rotatable around a rotation axis that is normal to the aforesaid movement plane. The rotation axis of the reference element 8 may be parallel to or coincide with the axis of the linear actuator 3.

The rotation axis of the reference element 8 may pass by the centre of the aforesaid spherical coupling of the orientable part (head with suction cup) of the gripping device 4. The orbital movement (rotation) of the reference element 8 may be driven, as in the specific embodiments, by a motor 9 (for example an electrically driven motor). The motor 9 may have, for example, a motor shaft connected (for example by gear means 10) to a rotatable support 11 (fifth wheel). The rotatable support 11 carries (integrally) the reference element 8, so that the rotation of the support 11 determines the orbital movement of the reference element 8. In particular, the rotatable support 11 may be rotatably coupled (by rolling supporting means) with a base 12 (integral with the fixed element of the actuator 3).

Basically, the reference element 8 may be positioned in a selective and controllable manner, for example by a programmable electronic control unit (not shown), in any desired position comprised in a complete orbital revolution around the gripping device 4.

The gripping device 4 may have at least one contact surface 13 intended for contact with the reference element 8. In particular, this contact surface 13 may be rounded. This contact surface 13 may be, for example, at least partially, or mostly, or entirely, a rotation surface.

It is noted that the reference element 8 may have a rounded contact surface intended for contact with the corresponding (rounded) contact surface 13 of the gripping device 4.

The operating unit 2 may further comprise control means for driving the linear actuator 3 so as to bring the gripping device 4 into contact against the reference element 8 and thus to adjust in the preset orientation. This adjustment step may be achieved by the effect of the contact of the gripping device 4 against the reference element 8 and by the effect of a preset movement (of the movable element 5) of the linear actuator 3 that carries the gripping device 4 whilst the latter remains in contact against the reference element 8 located in the preset position. In practice, the reference element 8 makes abutting means arranged on a side at a certain distance from a fulcrum (i.e. the centre of the aforesaid spherical coupling) so that, through the effect of the movement of the orientable head 6 caused by the (linear) movement of the actuator and of the action of the abutting means, torque is generated that moves the head 6 around the fulcrum.

The control means may comprise the programmable electronic control unit and the computer programming instructions for driving the actuator 3. Such control means may also be programmed for driving the motor 9 to locate the reference element 8 in the desired orbital reference position around the gripping device 4.

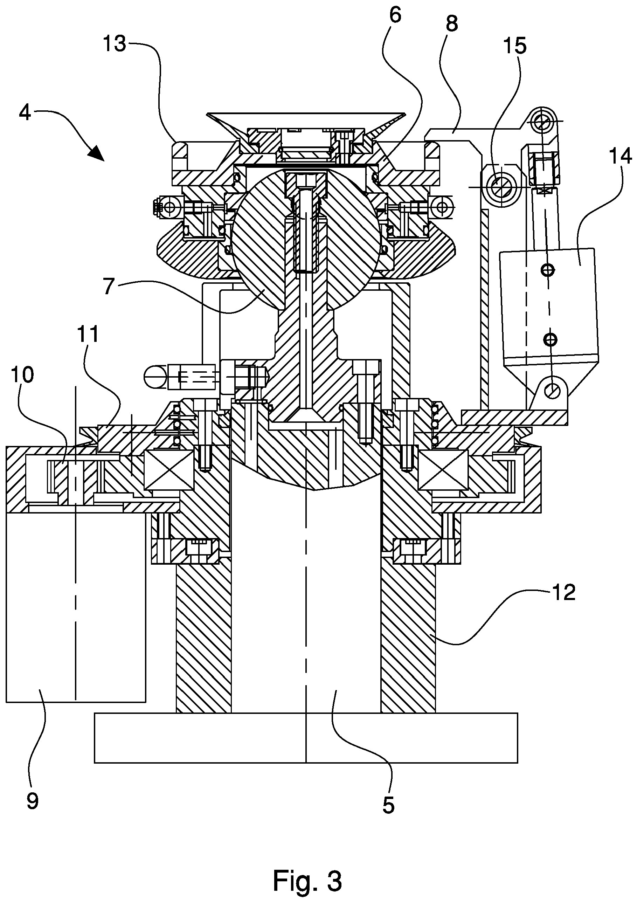

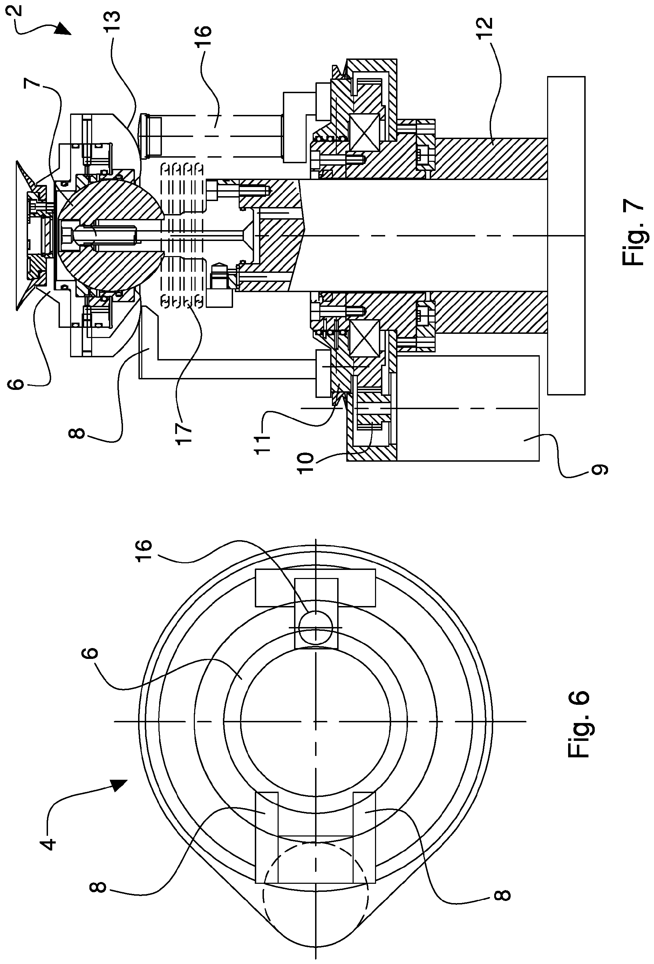

Figures 3 to 5 show some possible steps of orienting and positioning the gripping device 4 on the basis of the first embodiment (rising adjustment), whereas Figures 7 to 9 show some orientation and positioning steps on the basis of the second embodiment (descending adjustment).

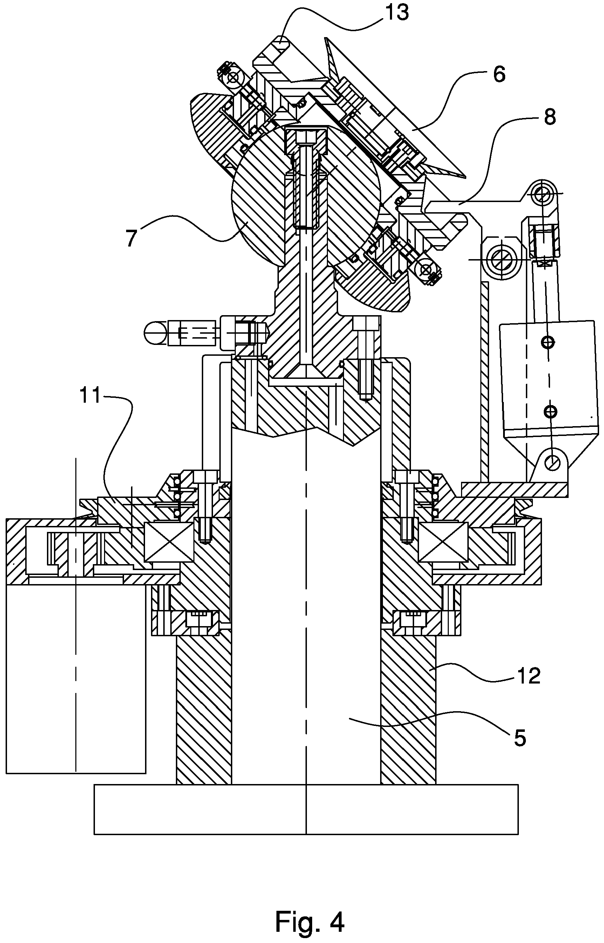

In figure 3 the gripping device 4 has been already brought into contact against the reference element 8, which had already been previously located in the orbital reference position suitable for obtaining the desired orientation of the gripping device 4. In this case, contact occurs during a rising movement of the linear actuator 3. Continuing in the rising movement of a preset stroke, the configuration in figure 4 is reached in which the head 6 of the gripping device is tilted according to the desired orientation. This tilt can be permitted because of the fact that the orientable head 6 is coupled in a substantially idle manner, or anyway not braked or not immobilised around the aforesaid spherical coupling.

As has been seen, in the first embodiment (figures 2 to 5) the contact surface 13 (of the orientable head) of the gripping device comprises a rounded annular portion (closed loop, in particular a revolution surface), in particular protruding upwards, intended for contact against a lower contact surface of the reference element 8. In the second embodiment (figures 6 to 9) the contact surface 13 (of the orientable head) of the gripping device will comprise a lower rounded (revolution) surface (for example in the shape of a spherical portion) intended for contact with an upper surface of the reference element 8.

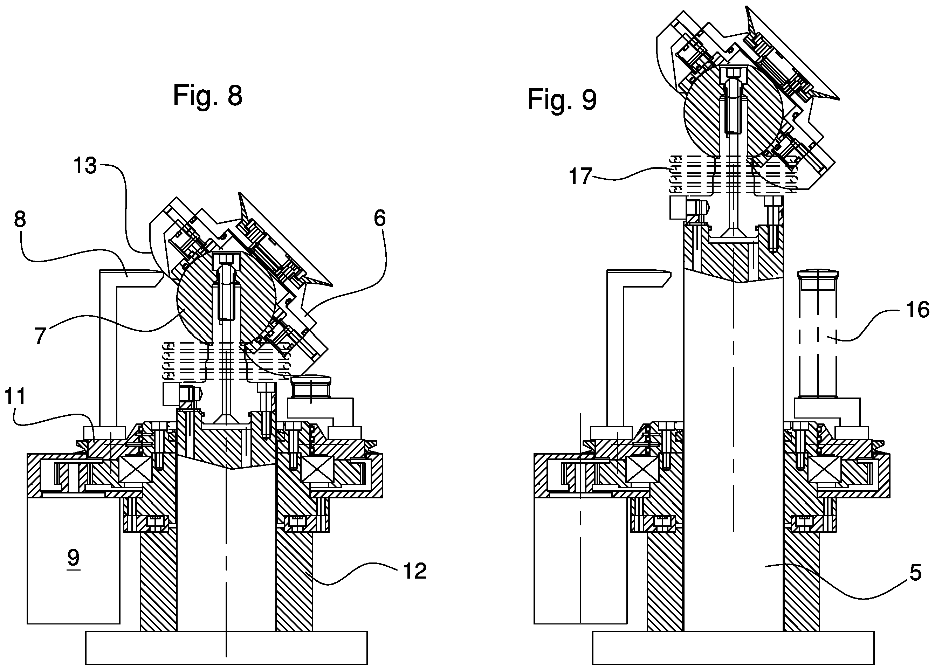

Whereas in the first embodiment the step of adjusting the head 6 to reach the preset tilt (in height) comprises a rise of the actuator 3 that carries the gripping device 4 (figures 3 and 4), in the second embodiment the step of adjusting the head 6 to reach the preset tilt (in height) comprises a descent of the actuator 3 that carries the gripping device 4 (figures 7 and 8).

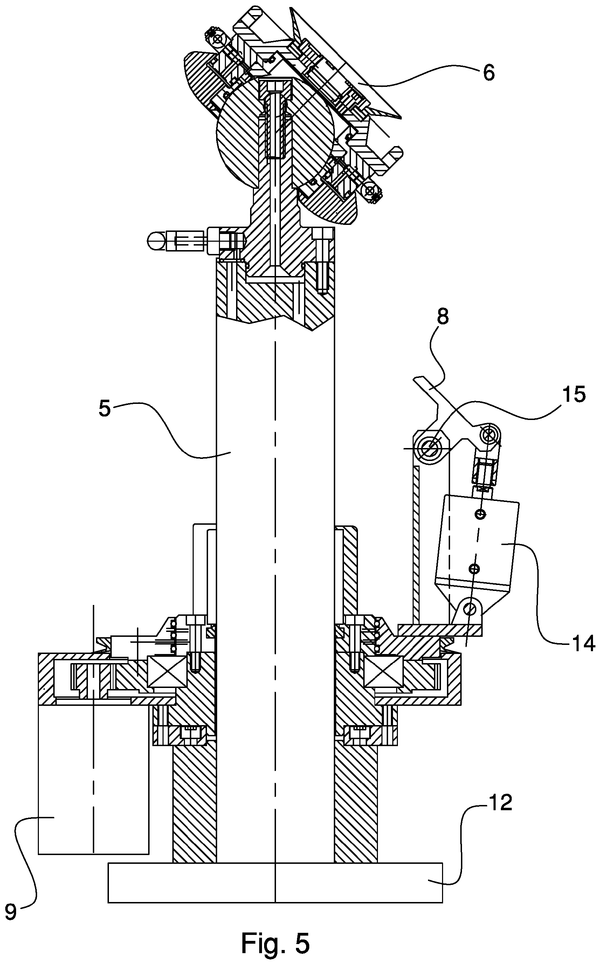

In both cases it is possible to provide a subsequent step (see figure 5 for the first embodiment and figure 9 for the second embodiment) in which, after immobilising the head 6 of the gripping device (for example by brake means) in the desired orientation, the linear actuator 3 is driven to take the gripping device 4 (always maintaining the head 6 immobilised in the orientation reached previously) to the programmed position, in particular to identify the engaging and supporting surface shaped in function of the surface (complex, for example with double curvature) of the workpiece to be machined. For this purpose, each gripping device 4 of the various operating units 2 may be orientable and positionable independently of the other gripping devices 4 of the various operating units 2 of the apparatus.

In the first embodiment, the reference element 8, in addition to the (orbital) movement around the (suction cup) head, may be liable to adopt an active or interfering position (figures 3 and 4), in which it is moved inwards to be able to interfere in contact with the (suction cup) head 6 of the gripping device 4, and an inactive position, or non-interference position or non-occupation position (figure 5), in which it is moved outwards in order not to interfere in contact with the gripping device 4 and thus permit the rising (linear) positioning movement of the device.

The reference element 8 may be provided, as in the first embodiment disclosed here, with movement means (for example a fluidly driven cylinder 14) to selectively adopt the active and inactive positions. In the specific case, the reference element 8 is rotatable around a rotation pivot 15.

The support 11, the cylinder 14, the reference element 8 and the pivot 15 thereof are part of a rotatable unit rotated by the motor 9 and mounted rotatably on the fixed part of the actuator 3.

It is noted that, for greater clarity, in Figures 2 to 9, the similar elements of the operating units, according to the two embodiments illustrated, have been indicated by the same numbering. It is possible to provide, as in the second embodiment (figures 6 to 9, relating to adjusting with descending movement of the gripping device 4), for the operating unit 2 comprising elastic means 16 arranged for maintaining the gripping device 4 (in particular the orientable head 6 thereof) in contact against the reference element 8 (for example by means of a contact plate of convex shape). Such elastic means 16 may comprise, for example, a compressible spring with an axis parallel to the axis of the linear actuator 3. Such elastic means 16 may be mounted on the rotatable support 11 that carries the reference element 8. Such elastic means 16 may be arranged at a distance from the reference element 8, in particular in a position (diametrically) opposite the reference element (in relation to the orbital movement axis of the reference element 8).

The support 11, the reference element 8 and the elastic means 16 are part of a rotatable unit rotated by the motor 9.

The reference element 8 may comprise, as in the second embodiment of Figures 6 to 9, at least two protrusions spaced apart from one another to define at least two contact points that are distinct from one another for contact with the gripping device 4. In figure 6 this double protrusions (fork) conformation of the reference element 8 is visible.

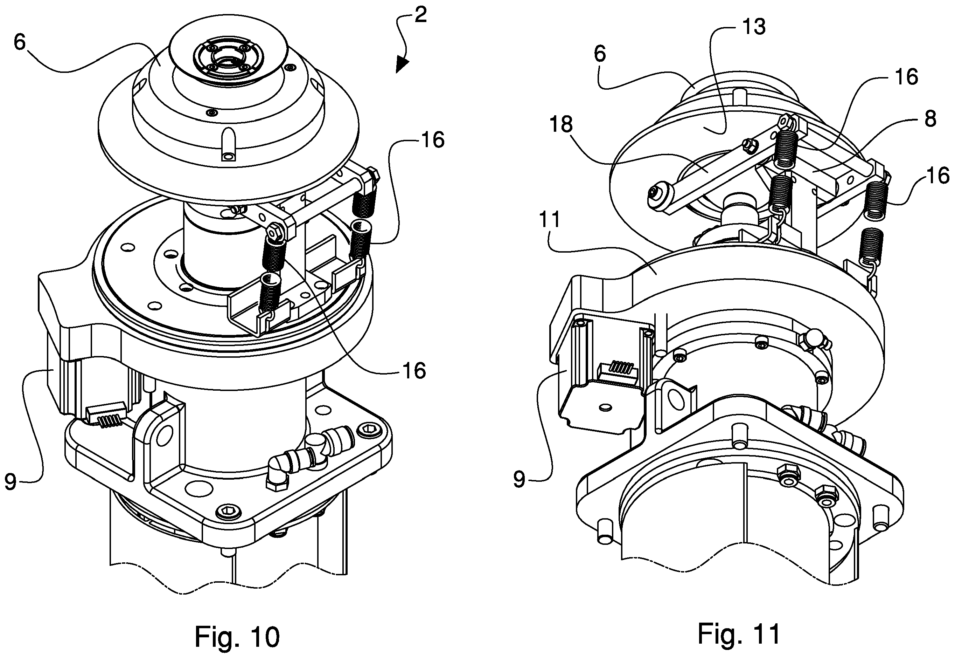

In the third embodiment (Figures 10 to 13), the elastic means 16 is arranged near to the reference element 8. The elastic means 16 may be connected (as in the third embodiment) to lever means 18 (in the specific case, the elastic means 16 is connected to the lever means 18 by fork means). The lever means 18 may be interposed between the elastic means 16 and the gripping device. The lever means 18 may be pivoted to the reference element 8. The lever means may have a first end connected to the elastic means 16 and a second end (opposite the first end) arranged in contact (with rolling or sliding friction) with the gripping device so that the elastic means 16 keeps the gripping device (in particular the orientable head thereof) in contact against the reference element 8. The second end may have rolling contact means.

In the three specific embodiments disclosed here, in which the gripping device 4 is a vacuum gripping device, supplying means may be provided for generating a vacuum in the (suction cup) head 6 of the device. Such vacuum generating means may be, for example, of substantially known type and have thus not been disclosed in detail. Such means for generating the vacuum may comprise, for example, conduit means (at least partially coaxial with the spherical joint) to connect the suction cup head 6 to suction means (not illustrated). In Figures 7 to 9 a conduit 17 has been represented schematically that is wound (in a spiral) around the (vertical) axis of the gripping device 4 to enable, in any possible position and orientation of the head, a fluid (air) to be supplied that is used for releasing the brake means (normally closed in the immobilised position of the head).

It is noted that in both the illustrated embodiments the head 6 is substantially oriented around the centre of a spherical coupling, even if other types of kinematic couplings could be used.

It is further possible to provide for each operating unit 2 being equipped with sensor means (for example a position sensor or a proximity sensor, in particular of optical or magnetic type, or a simple switch or an electric contact, etc) to signal (to the control means) the (angular) position of the reference element 8 in the orbital (rotary) path thereof, or to identify in this path an initial position (or zero position) of the reference element 8. It is further possible for the operating unit 2 according to the first embodiment to be fitted with sensor means for detecting at least whether the reference element 8 is in an active (interference) or inactive (non-interference) position.

Considering a system of spherical coordinates having as a centre the centre of the aforesaid spherical coupling, it can be said that substantially the orbital movement of the reference element 8 defines the azimuth angle of the desired orientation of the orientable head 6, whilst the movement of the actuator 3, which causes a variation in the tilt of the orientable head 6, determines the altitude angle of the head, whereby the orientation in the three-dimensional space of the orientable head 6 of the gripping device 4 is fully defined.

In the disclosed embodiments the (orbital) movement of the reference element 8 is driven by its own and independent motor means arranged on the operating unit 2. It is nevertheless possible, in other embodiments that have not been illustrated, to provide a servomechanism for transforming a linear motion (of the movable element 5 of the linear actuator) into a rotary motion (of the rotating unit that carries the reference element 8), so that the (orbital) movement of the reference element 8 is subordinated to the (linear) movement of the actuator 3. It is further possible to provide coupling means (for example of the clutch type) applied to the servomechanism to selectively connect and disconnect the reference element 8 with respect to the actuator 3 so as to be able to achieve a first step (with the servomechanism engaged) in which the movement of the actuator 3 determines by slaving the (orbital) positioning of the reference element 8, and at least one second step (with the servomechanism disengaged) in which the movement of the actuator determines the orientation of the head 6 of the gripping device.

## Claims

1. Apparatus for holding a workpiece in machining position, comprising at least one operating unit (2) which in turn comprises at least one actuator (3) and one gripping device (4) for engaging and supporting the workpiece, said gripping device (4) being carried by a movable element (5) of said at least one actuator (3) with the possibility of orienting in space with respect to said movable element (5), the operating location of said gripping device (4) being determined by the orientation thereof with respect to said movable element (5) and by the position of said movable element (5), said apparatus comprising orienting means for automatically orienting said gripping device (4) according to a preset orientation, **characterised in that** said orienting means comprises at least one reference element (8) that is positionable in a preset position, means being provided for driving said movable element (5) so as to take said gripping device (4) into contact against said reference element (8) and to adjust itself in said preset orientation, said adjustment being made by the effect of the contact of said gripping device (4) against said reference element (8) in said preset position and by a preset shift of said movable element (5) that carries said gripping device (4).

2. Apparatus according to claim 1, comprising a plurality of said operating units (2) arranged for defining an engaging and supporting surface that is at least partially shaped like the workpiece.

3. Apparatus according to claim 1 or 2, wherein said at least one reference element (8) is positionable, having a possibility of orbital movement around said gripping device (4).

4. Apparatus according to claim 3, wherein said at least one reference element (8) is movable on a movement plane that is transverse, for example perpendicular, to a linear movement axis of said movable element (5).

5. Apparatus according to claim 4, wherein said at least one reference element (8) is rotatable around a rotation axis that is normal to said movement plane.

6. Apparatus according to any preceding claim, wherein said orienting means comprises elastic means (16) arranged for maintaining said gripping device (4) in contact against said reference element (8).

7. Apparatus according to claim 6, wherein said elastic means (16) is connected to said gripping device (4) by lever means (18).

8. Apparatus according to any preceding claim, wherein said at least one reference element (8) comprises at least two protrusions spaced apart from one another to define at least two points of contact that are distinct from one another for contact with said gripping device (4).

9. Apparatus according to any preceding claim, wherein said gripping device (4) has at least one contact surface (13) intended for contact with said reference element (8), said contact surface (13) being rounded and being at least partially a rotation surface.

10. Apparatus according to any preceding claim, wherein said at least one actuator (3) carries said gripping device (4) with the possibility of orienting said gripping device (4) by a spherical coupling.

11. Apparatus according to any preceding claim, wherein, during said adjustment, said at least one actuator (3) carries said gripping device (4) with the possibility of orienting said gripping device in a substantially idle or non-locked manner and wherein said operating unit (2) comprises brake means operationally associated with said gripping device (4) to lock the latter in said preset orientation.

12. Apparatus according to any preceding claim, wherein said gripping device (4) is of the vacuum type.

13. Apparatus according to claim 12, wherein said vacuum gripping device comprises a suction head (6) intended for contact with the workpiece, said suction head (6) being orientable by a spherical coupling with a supporting body (7) carried by said movable element.

14. Method for using the apparatus according to any preceding claim, comprising the following steps: positioning said reference element (8) in said preset position; driving said movable element (5) so as to take said gripping device (4) into contact against said reference element (8) and then to adjust itself in said preset orientation through the effect of the abutment against said reference element (8) in said preset position; locking said gripping device (4) in said preset orientation; and driving said movable element (5), with said gripping device (4) locked in said preset orientation, until said gripping device (4) is taken to a desired operating configuration.

## Patentansprüche

1. Vorrichtung zum Halten eines Werkstückes in Bearbeitungsposition, mit zumindest einer Arbeitseinheit (2), die wiederum zumindest einen Aktuator (3) und eine Greifeinrichtung (4) zum in Eingriff kommen mit dem Werkstück und Stützen des selben aufweist, wobei die Greifeinrichtung (4) von einem beweglichen Element (5) des zumindest einen Aktuators (3) mit der Möglichkeit einer Orientierung im Raum bezüglich des beweglichen Elements (5) getragen ist, wobei der Arbeitsort der Greifeinrichtung (4) durch die Orientierung derselben bezüglich des beweglichen Elementes (5) und durch die Position des beweglichen Elements (5) bestimmt ist, wobei die Vorrichtung Orientierungsmittel zur automatischen Orientierung der Greifeinrichtung (4) gemäß einer voreingestellten Orientierung aufweist, **dadurch gekennzeichnet, dass** die Orientierungsmittel zumindest ein Bezugselement (8) aufweisen, das in eine voreingestellte Position positionierbar ist, wobei Mittel zum Antreiben des beweglichen Elements (5) vorgesehen sind, um die Greifeinrichtung (4) in Berührung gegen das Bezugselement (8) zu bringen und sich in die voreingestellte Orientierung zu justieren, wobei die Justierung durch die Wirkung der Berührung der Greifeinrichtung (4) gegen das Bezugselement (8) in der voreingestellten Position und durch eine voreingestellte Verlagerung des beweglichen Elementes (5), das die Greifeinrichtung (4) trägt, bewirkt wird.

2. Vorrichtung nach Anspruch 1, mit einer Mehrzahl von den Arbeitseinheiten (2), die zum Definieren einer Eingriffs- und Stützfläche angeordnet sind, die zumindest teilweise wie das Werkstück geformt ist.

3. Vorrichtung nach Anspruch 1 oder 2, wobei das zumindest eine Bezugselement (8) positionierbar ist, wobei es eine Möglichkeit einer orbitalen Bewegung um die Greifeinrichtung (4) aufweist.

4. Vorrichtung nach Anspruch 3, wobei das zumindest eine Bezugselement (8) auf einer Bewegungsebene beweglich ist, die quer, beispielsweise senkrecht, zu einer linearen Bewegungsachse des beweglichen Elements (5) verläuft.

5. Vorrichtung nach Anspruch 4, wobei das zumindest eine Bezugselement (8) um eine Rotationsachse drehbar ist, die zu der Bewegungsebene normal ist.

6. Vorrichtung nach irgendeinem vorhergehenden Anspruch, wobei die Orientierungsmittel elastische Mittel (16) aufweisen, die zum Aufrechterhalten der Berührung der Greifeinrichtung (4) gegen das Bezugselement (8) angeordnet sind.

7. Vorrichtung nach Anspruch 6, wobei die elastischen Mittel (16) mit der Greifeinrichtung (4) durch Hebelmittel (18) verbunden sind.

8. Vorrichtung nach irgendeinem vorhergehenden Anspruch, wobei das zumindest eine Bezugselement (8) zumindest zwei Vorsprünge aufweist, die voneinander beabstandet sind, um zumindest zwei Berührungspunkte zur Berührung mit der Greifeinrichtung (4) zu definieren, die voneinander verschieden sind.

9. Vorrichtung nach irgendeinem vorhergehenden Anspruch, wobei die Greifeinrichtung (4) zumindest eine Berührfläche (13) aufweist, die zur Berührung mit dem Bezugselement (8) dient, wobei die Berührfläche (13) abgerundet ist und zumindest teilweise eine Rotationsfläche ist.

10. Vorrichtung nach irgendeinem vorhergehenden Anspruch, wobei der zumindest eine Aktuator (3) die Greifeinrichtung (4) mit der Möglichkeit eines Orientierens der Greifeinrichtung (4) durch eine Kugelkupplung trägt.

11. Vorrichtung nach irgendeinem vorhergehenden Anspruch, wobei, während der Justierung, der zumindest eine Aktuator (3) die Greifeinrichtung (4) mit der Möglichkeit eines Orientierens der Greifeinrichtung im Wesentlichen frei oder nichtverriegelt trägt, und wobei die Arbeitseinheit (2) Bremsmittel aufweist, die mit der Greifeinrichtung (4) wirkverbunden sind, um letztere in der voreingestellten Orientierung zu verriegeln.

12. Vorrichtung nach irgendeinem vorhergehenden Anspruch, wobei die Greifeinrichtung (4) vom Vakuum-Typ ist.

13. Vorrichtung nach Anspruch 12, wobei die Vakuum-Greifeinrichtung einen Saugkopf (6) aufweist, der zur Berührung mit dem Werkstück dient, wobei der Saugkopf (6) durch eine Kugelkupplung orientierbar ist, wobei ein Stützkörper von dem beweglichen Element getragen ist.

14. Verfahren zum Verwenden der Vorrichtung nach irgendeinem vorhergehenden Anspruch, mit den folgenden Schritten: Positionieren des Bezugselementes (8) in die voreingestellte Position; Antreiben des beweglichen Elementes (5), um die Greifeinrichtung (4) in Berührung gegen das Bezugselement (8) zu bringen und dann sich selbst in die voreingestellte Orientierung durch die Wirkung der Anlage gegen das Bezugselement (8) in der voreingestellten Position zu justieren; Verriegeln der Greifeinrichtung (4) in der voreingestellten Orientierung; und Antreiben des beweglichen Elements (5), wobei die Greifeinrichtung (4) in der voreingestellten Orientierung verriegelt ist, bis die Greifeinrichtung (4) in eine gewünschte Arbeitskonfiguration gebracht ist.

## Revendications

1. Appareil destiné à porter une pièce de travail en position d'usinage, comprenant au moins une unité d'actionnement (2) qui à son tour comprend au moins un actionneur (3) et un dispositif de préhension (4) destiné à venir en contact avec et à supporter la pièce de travail, ledit dispositif de préhension (4) étant porté par un élément mobile (5) dudit au moins un actionneur (3) avec la possibilité de s'orienter dans l'espace par rapport audit élément mobile (5), la position de fonctionnement dudit dispositif de préhension (4) étant déterminée par son orientation par rapport audit élément mobile (5) et par la position dudit élément mobile (5), ledit appareil comprenant des moyens d'orientation destinés à orienter automatiquement ledit dispositif de préhension (4) selon une orientation prédéfinie, **caractérisé en ce que** lesdits moyens d'orientation comprennent au moins un élément de référence (8) apte à être positionné dans une position prédéfinie, des moyens étant prévus pour entraîner ledit élément mobile (5) de manière à amener ledit dispositif de préhension (4) au contact dudit élément de référence (8) et à s'ajuster dans ladite orientation prédéfinie, ledit ajustement étant réalisé par l'effet du contact dudit dispositif de préhension (4) contre ledit élément de référence (8) dans ladite position prédéfinie et par un décalage prédéfini dudit élément mobile (5) qui porte ledit dispositif de préhension (4).

2. Appareil selon la revendication 1, comprenant une pluralité desdites unités d'actionnement (2) agencées pour définir une surface d'engagement et de support ayant au moins partiellement la forme de la pièce de travail.

3. Appareil selon la revendication 1 ou 2, dans lequel ledit au moins un élément de référence (8) peut être positionné, ayant une possibilité de mouvement orbital autour dudit dispositif de préhension (4).

4. Appareil selon la revendication 3, dans lequel ledit au moins un élément de référence (8) est mobile sur un plan de déplacement qui est transversal, par exemple perpendiculaire, à un axe de déplacement linéaire dudit élément mobile (5).

5. Appareil selon la revendication 4, dans lequel ledit au moins un élément de référence (8) peut être entraîné en rotation autour d'un axe de rotation qui est normal audit plan de déplacement.

6. Appareil selon l'une quelconque des revendications précédentes, dans lequel lesdits moyens d'orientation comprennent des moyens élastiques (16) agencés pour maintenir ledit dispositif de préhension (4) au contact dudit élément de référence (8).

7. Appareil selon la revendication 6, dans lequel lesdits moyens élastiques (16) sont reliés audit dispositif de préhension (4) par des moyens de levier (18).

8. Appareil selon l'une quelconque des revendications précédentes, dans lequel ledit au moins un élément de référence (8) comprend au moins deux protubérances espacées l'une de l'autre pour définir au moins deux points de contact qui sont distincts l'un de l'autre pour un contact avec ledit dispositif de préhension (4).

9. Appareil selon l'une quelconque des revendications précédentes, dans lequel ledit dispositif de préhension (4) possède au moins une surface de contact (13) destinée au contact avec ledit élément de référence (8), ladite surface de contact (13) étant de forme arrondie et étant au moins partiellement une surface à rotation.

10. Appareil selon l'une quelconque des revendications précédentes, dans lequel ledit au moins un actionneur (3) porte ledit dispositif de préhension (4) avec la possibilité d'orienter ledit dispositif de préhension (4) par un raccord sphérique.

11. Appareil selon l'une quelconque des revendications précédentes, dans lequel, lors dudit ajustement, ledit au moins un actionneur (3) porte ledit dispositif de préhension (4) avec la possibilité d'orienter ledit dispositif de préhension de manière sensiblement au repos ou non verrouillée et dans lequel ladite unité d'actionnement (2) comprend des moyens de freinage fonctionnellement associés audit dispositif de préhension (4) pour verrouiller ce dernier dans ladite orientation prédéfinie.

12. Appareil selon l'une quelconque des revendications précédentes, dans lequel ledit dispositif de préhension (4) est du type à dépression.

13. Appareil selon la revendication 12, dans lequel ledit dispositif de préhension par dépression comprend une tête à ventouse (6) destinée au contact avec la pièce de travail, ladite tête à ventouse (6) pouvant être orientée par un raccord sphérique possédant un corps de support (7) porté par ledit élément mobile.

14. Procédé d'utilisation de l'appareil selon l'une quelconque des revendications précédentes, comprenant les étapes suivantes : positionner ledit élément de référence (8) dans ladite position prédéfinie ; entraîner ledit élément mobile (5) de manière à amener ledit dispositif de préhension (4) au contact dudit élément de référence (8) et ensuite à s'ajuster dans ladite orientation prédéfinie par l'effet de la mise en butée contre ledit élément de référence (8) dans ladite position prédéfinie ; verrouiller ledit dispositif de préhension (4) dans ladite orientation prédéfinie ; et entraîner ledit élément mobile (5), avec ledit dispositif de préhension (4) verrouillé dans ladite orientation prédéfinie, jusqu'à amener ledit dispositif de préhension (4) jusqu'à une configuration de fonctionnement souhaitée.
